(19) Europäisches Patentamt
European Patent Office
Office européen des brevets

(11) Publication number: **0 335 406 B1**

(12) # EUROPEAN PATENT SPECIFICATION

(45) Date of publication of patent specification: **20.09.95**

(51) Int. Cl.6: **C08L 67/06**, C08L 63/10, C08L 83/12

(21) Application number: **89105668.1**

(22) Date of filing: **30.03.89**

The file contains technical information submitted after the application was filed and not included in this specification

(54) **Low profile molding system.**

(30) Priority: **31.03.88 US 175987**

(43) Date of publication of application:
**04.10.89 Bulletin 89/40**

(45) Publication of the grant of the patent:
**20.09.95 Bulletin 95/38**

(84) Designated Contracting States:
**AT BE CH DE ES FR GB GR IT LI LU NL SE**

(56) References cited:
**WO-A-86/04908**
**FR-A- 2 288 123**
**FR-A- 2 507 195**
**US-A- 4 336 344**
**US-A- 4 555 534**

(73) Proprietor: **UNION CARBIDE CORPORATION**
**39 Old Ridgebury Road**
**Danbury**
**Connecticut 06817 (US)**

(72) Inventor: **Atkins, Kenneth Earl**
**1311 Martha Road**
**South Charleston(25303)**
**West Virginia (US)**
Inventor: **Gentry, Robert Ray**
**111 Riverview Drive**
**St. Albans (25177)**
**West Virginia (US)**
Inventor: **Gandy, Raymond Cornelius**
**2629 Rosevelt Avenue**
**St. Albans (25177)**
**West Virginia (US)**

(74) Representative: **Barz, Peter, Dr. et al**
**Patentanwalt**
**Kaiserplatz 2**
**D-80803 München (DE)**

EP 0 335 406 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a molding additive composition comprising a mixture of a low profile additive and a surfactant additive containing a silicon-oxyalkylene copolymer which acts both as flow control agent and surface modifying agent. The invention embraces a molding composition comprising a polyester molding resin, a low profile additive, and a silicon-oxyalkylene copolymer flow control agent and surface modifying agent. A desirable ingredient of the compositions of the invention is a crosslinking monomer. In its most favorable embodiment, the invention embraces a molding composition comprising a polyester molding resin, a crosslinking monomer, a low profile additive, a reinforcing fiber, and a silicon-oxyalkylene copolymer flow control agent and surface modifying agent.

Low profile additives have been commercially employed for about 30 years. They are valuable additives to thermosetting molding compositions that are used to generate molded articles that possess minimal shrinkage. Generally, the low profile additives are thermoplastic materials which at the curing temperature of the thermosetting resin, have a limited degree of compatibility with the cured resin. Consequently, the additive separates from a condition of solution with the cured molding resin, creating void spaces in the surface of the molded article which occupy the space in the mold created by shrinkage of the resin due to the thermosetting crosslinking reaction.

Looking at the low profile additive development in a more limited sense, it relates to a technical improvement that has made a significant contribution to commercial polyester molding technology. The use of low profile additives to reduce shrinkage during the curing reaction results in improved dimensional stability and surface smoothness of unsaturated polyester resins. Low profile additives are typically thermoplastic polymers such as vinyl acetate polymers, polystyrene, acrylic polymers, polyurethanes, aliphatic polyesters (such as derived from polycaprolactones and aliphatic polyesters derived from dicarboxylic acids and aliphatic diols).

There are a number of theories that seek to explain the low profile or anti-shrinkage action of these polymers, but the one that seems to best explain the phenomenon is the following relative to unsaturated polyesters blended with styrene monomer:

The low profile additive is at least partly soluble in the uncured polyester/styrene solution. As the polyester/styrene mixture crosslinks, the thermoplastic polymer becomes incompatible or less soluble and at least partly comes out of solution. This action causes a volume expansion that compensates for the shrinkage that occurs when the polyester/styrene mixture crosslinks.

The development of low-profile thermosetting resin compounds, such as unsaturated polyester compounds, has led to a wide acceptance of these materials by the transportation and other industries because of their good surface appearance, dimensional stability, physical properties, assembly consolidation and potential weight savings. However, as new applications have developed, standards have been raised, making it desirable to have even better surface appearance and the elimination of ripples and waviness that sometimes develop, particularly in relatively large appearance sensitive areas.

Developments have been made in this art which are related to special compositions and special problems. For example,US-A-4,032,494 uses liquid siloxanes as additives in polyester composites containing vinylacetate polymers to reduce the water absorption of the cured polyester composite. The siloxanes illustrated in the patent all possess the silicone structure, to the essential exclusion of other structures, though the patent fails to indicate that other structures are not embodied by the invention of the patent.

In relating to a pigmentability problem, US-A-4,555,534 embraces a curable molding composition containing.

(a) a polyester resin;
(b) an olefinically unsaturated monomer;
(c) a thickening agent comprising an oxide or hydroxide of a metal of Group I, II, or III of the Periodic Table;
(d) a pigment;
(e) a carboxylated vinyl acetate polymer low profile additive; and
(f) a surface active compound that is employed in an amount sufficient to enhance the uniformity of the pigmentation of the cured composite produced from said curable molding composition.

The above highlighted portions of the description of US-A-4,555,534 are significant to the consideration of this invention. The patent describes a wide variety of surface active compounds that enhance the uniformity of the pigmentation of the cured composite produced from the curable molding compositions. The patent also characterizes a number of surface active compounds that fail to enhance the uniformity of the pigmentation of the cured composite produced from the curable molding compositions. For example, Table XV, at column 16 of the patent, lists a number of surface active compounds that failed to enhance the

uniformity of pigmentation. Those were the surfactants that yielded a "pigmentability rating" of less than 3, and appear to comprise those surfactants that were not cited in Table XVI of the patent. Table XVII, at col. 17, indicates that the control, using a different low profile additive than the one used with Tables XV and XVI, had a "pigmentability rating" of 1, and Table XVIII lists surfactants which gave a pigmentability rating of 2 or more, "which means that they improved the pigmentability compared with the formulation containing no surfactant." Of the about 94 illustrations of surfactants mentioned in Table XV, L-5420 and L-5303, column 16, are siloxane-polyoxyalkylene copolymers. They gave pigmentability ratings of 2, meaning, according to the discussions before Table XVI, they failed to improved the pigmentability. There is no indication as to how they would have fared if used with the low profile system that was employed with Tables XVII and XVIII.

Particularly, US-A-4,555,534 specifically describes, among many others,

(i) compositions comprising vinyl acetate/maleic acid copolymer having 0.7 to 2.1 weight percent maleic acid and showing a styrene solution viscosity (40 weight percent, 25°C) of 3,400 to 16,000 mPa.s (centipoise) as the low profile additive and a siloxane-polyoxyalkylene block copolymer as the silicon-oxyalkylene copolymer;

and

(ii) compositions comprising (a') a polyester made from isophthalic acid, maleic anhydride and propylene glycol in approximate molar proportions of 1.0 : 3.0 : 4.4 and having an acid number of 19.9 and a molecular weight to double bond ratio of 224.7; (b') 46.76 weight percent, based on the combined weight of (a'), (b') and (c'), of styrene, (c') 14 weight percent, based on the combined weight of (a'), (b') and (c'), of a vinyl acetate/maleic acid copoylmer having 0.7 to 2.1 weight percent maleic acid and showing a styrene solution viscosity (40 weight percent, 25°C) of 3,400 to 16,000 mPa.s (centipoise); and (d') a siloxane-polyoxyalkylene block copolymer in an amount of 0.3 or 0.6 weight percent of (a'), (b') and (c').

None of the materials described in US-A-4,032,494 are shown to be flow control agents or surface modifying additives. They are described to enhance pigmentability, which means the composition has to possess a pigment. This patent is restricted in its teachings to compositions containing pigments.

The invention relates to, i.a.:

I. A molding additive composition comprising a mixture of low profile additive and a surfactant additive containing a silicon-oxyalkylene copolymer which acts both as flow control agent and surface modifying agent and contains

a) at least one silicon per molecule;

b) at least 2 alkylene oxide moieties in a sequence per molecule;

c) the alkylene oxides being bonded to silicon in the molecule through a carbon to silicon bond;

said low profile additive being a thermoplastic polymer having a molecular weight greater than that of the silicon-oxyalkylene copolymer;

compositions comprising vinyl acetate/maleic acid copolymer having 0.7 to 2.1 weight percent maleic acid, the remainder being vinyl acetate, and showing a styrene solution viscosity (40 weight percent, 25°C) of 3,400 to 16,000 mPa.s (centipoise) as the low profile additive and a siloxane-polyoxyalkylene block copolymer as the silicon-oxyalkylene copolymer being excluded.

II. A molding composition comprising

(a) a thermosetting unsaturated polyester resin;

(b) from 25 to 70 weight percent of an olefinically unsaturated crosslinking monomer which is crosslinkable with the unsaturated polyester resin;

(c) from 1 to 25 weight percent of a thermoplastic low profile additive for shrinkage control; and

(d) 0.1 to 10 weight percent of a silicon-oxyalkylene copolymer as defined in claim 1 and having a lower molecular weight than the low profile additive (c); all weights being based on the combined weight of components (a), (b) and (c);

compositions comprising (a') a polyester made from isophthalic acid, maleic anhydride and propylene glycol in approximate molar proportions of 1.0 : 3.0 : 4.4 and having an acid number of 19.9 and a molecular weight to double bond ratio of 224.7; (b') 46.76 weight percent, based on the combined weight of (a'), (b') and (c'), of styrene, (c') 14 weight percent, based on the combined weight of (a'), (b') and (c'), of a vinyl acetate/maleic acid copoylmer having 0.7 to 2.1 weight percent maleic acid, the remainder being vinyl acetate, and showing a styrene solution viscosity (40 weight percent, 25°C) of 3,400 to 16,000 mPa.s (centipoise); and (d') a siloxane-polyoxyalkylene block copolymer in an amount of 0.3 or 0.6 weight percent of (a'), (b') and (c'); being excluded.

III. The above molding composition reinforced with fiber. The above molding additive composition may also contain a crosslinking monomer, e.g., styrene.

This invention provides molding compositions that the provide the following advantages:

- improve flow during molding;
- improved physicals for the molded product;
- smoother surfaces for the molded product, i.e., better replication of the mold and the mold's dimensions; and
- molded fiber reinforced plastic parts that have less shrinkage.

A particularly preferred aspect of the invention is the fact that none of the aforementioned compositions require the presence of a pigment. In the usual case in practicing the invention, the compositions will be free of pigments. Moreover, it is not the intent of the invention to provide improved pigmentability or reduced water absorbancy.

The invention is concerned with an improvement in thermosetting resin molding compositions and additive compositions which may be employed in making effective thermosetting resin molding compositions. The invention contemplates molding compositions suitable for compression, casting, transfer, injection, pultrusion, resin transfer, vacuum forming, and the like, molding techniques. The invention is directed to thermoset molding systems possessing enhanced flow characteristics and surface control.

Fiber reinforced plastics (FRP) are being considered for many new automotive applications. The quality of these new FRP parts will be effected by the flow of the molding compound in the press. A screening evaluation of thirty potential flow additives in bulk molding compound has indicated that among the best candidates identified for flow improvement are silicone surfactants of the type characterized herein. Some have shown to be very effective in raising tensile strength (from 25-60%).

Some of the problems associated with fiber reinforced plastics (FRP) are porosity, blisters, non-fills, surface smoothness, and strength properties. The degree to which any of the above become problems could depend on the flow of the molding compound during the heterogeneous mixture of resin, filler and fiberglass. The flow comes from the resin portion (30 weight percent) which must distribute the filler (about 42 weight percent) and the fiberglass (about 30 weight percent) uniformly over the molded fiberglas part.

As these materials flow, they push out the air which, if not removed, could cause porosity, blisters and poor physicals. How smoothly and evenly these materials flow determines many times how smooth the surface will be. Some of the factors that influence flow are listed below:

a. Molding formula
b. Filler content
c. Fiberglass length and concentration
d. Polyester
e. Peroxide initiator
f. Inhibitor level

It has been determined that many of the problems concerning the moldability of fiber reinforced plastics are ammeliorated by the provision of the flow additives of the invention. The flow improvements provided by the invention allows the invention to help in meeting the increase is quality standards for fiber reinforced molded parts, especially as set by automotive manufacturers and owing to the fact that the new parts being molded

1. Are larger and more complex
2. Have large, flat surfaces which require smoother surfaces
3. Use polyester resin systems which provide enhanced toughness but which do not flow as well, and
4. Require higher glass contents to get desired strength properties.

The invention contemplates the use of resin systems that employ low profile additives in combination with a variety of thermosetting resins, that is, resins that cure by crosslinking through functional groups in the polymeric resin. The greatest proportion of the resin systems employ unsaturated polyester resins. Other resins include, e.g., phenolic resins, epoxy resins, urethane resins, and the like.

Thermosetting polyester resins suitable for use in accordance with the invention are polyester resins that are reaction products of a dicarboxylic acid or anhydride, with a polyhydric alcohol. The dicarboxylic acids or anhydrides that are employed to produce the polyester, either singly or in combination, must include those that contain olefinic unsaturation, preferably wherein the olefinic unsaturation is alpha, beta to at least one of the carboxylic acid groups. Such acids include maleic acid or anhydride, fumaric acid, methylmaleic acid, and itaconic acid. Maleic acid or anhydride and fumaric acid are the most widely used commercially.

In addition to the olefinically unsaturated acid or anhydride, saturated and/or aromatic dicarboxylic acids or anhydrides can also be employed in producing the polyester. Such acids include phthalic acid or anhydride, terephthalic acid, hexahydrophthalic acid or anhydride, adipic acid, isophthalic acid, and "dimer" acid (i.e., dimerized fatty acids).

A polyol is also employed to produce the polyester. Such polyols include ethylene glycol, diethylene glycol, propylene glycol, dipropylene glycol, butylene glycols, neopentyl glycol, glycerol and 1,1,1-trimethylolpropane. As a rule, Dot more than about 20 mole percent of the polyol will be a triol, with the remainder being one or more diols.

As is known in the art, polyesters that are employed in thickened molding compositions must contain residual acidity in order to enter into the thickening reaction. The nature and production of the polyesters used in such applications, including dicyclopentadiene modified resins, are known in the art and are described in US-A-3,933,757 and 3,883,612.

Vinyl ester resins that have been advantageously employed in both bulk molding compounds (BMC) and sheet molding compounds (SMC) are resins wherein the secondary hydroxyl group formed by the interaction of an epoxide group with a carboxylic acid group has been reacted with a dicarboxylic acid anhydride to produce pendant carboxylic acid groups. A variety of saturated and unsaturated anhydrides similar to those described as useful in preparing the unsaturated polyester resins may be used in proportions of at least 0.1 mole of anhydride per equivalent of hydroxyl group up to an amount sufficient to react with each hydroxyl.

Thermosetting resins that are classified herein as vinyl ester resins, which contain the characteristic linkages and terminal, polymerizable unsaturated groups are fully disclosed in US-A-3,887,515 along with the preparation of such resins. A further description of these well known resins is regarded to be unnecessary for them to be used in the practice of this invention. Vinyl ester resins are embraced by the term unsaturated polyester resin.

In their most useful embodiments, low profile additive resin systems employ low viscosity crosslinking monomers. Where the resin is an unsaturated polyester, including vinyl ester, it is preferred that the monomers contain ethylenic unsaturation such that the monomer is copolymerizable with the polyester and terminally unsaturated vinyl ester resins. Useful monomers include styrene, alkyl acrylates and methacrylates such as $C_{1-12}$ alkyl acrylates and methacrylates, substituted styrenes such as $\alpha$-methyl styrene, $\alpha$-chlorostyrene, 4-methylstyrene, and the like, divinylbenzene, acrylonitrile, methacrylonitrile, and the like. Styrene is the preferred monomer in commercial practice today, although others can be used.

The low viscosity crosslinking monomer is also employed in the resin composition (the thermosetting resin may be a solid at ambient temperatures, i.e., about 20°-25°C.) to dissolve the resin thereby ensuring that the resin composition is a fluid. In this case, the monomer acts as a reactive diluent. Enough monomer is employed so that the viscosity of the fluid is at a convenient level for processing. Excessive amounts of the monomer should be avoided because an excess can have an adverse effect on the cured resin's properties. For example, too much monomer tends to cause embrittlement of the cured polyester. With these guidelines, effective proportions of the monomer are within the range of from 25 to 70, and preferably 40 to 55, weight percent, based on weight of thermosetting polyester resin plus monomer and thermoplastic additive.

When desired, a thickening agent can also be employed in the compositions of the invention. Such materials are known in the art, and include the oxides and hydroxides of the metals of Group I, II and III of the Periodic Table . Illustrative examples of thickening agents include magnesium oxide, calcium oxide, calcium hydroxide, zinc oxide, barium oxide, magnesium hydroxide and the like, including mixtures of the same. Thickening agents are normally employed in proportions of from 0.1 to 6 weight percent, based upon weight of the polyester resin, crosslinking monomer and low profile additive.

Alternatively, a dual thickening system may be employed. This involves, for example, a metallic oxide or hydroxide and a polyisocyanate where the amount of isocyanate is theoretically equivalent to at least 0.3 of the available hydroxyl groups but not more than 1.05 times the available hydroxyl groups, and the amount of metallic oxide or hydroxide is sufficient to react with at least thirty percent of the carboxyl groups but not more than seventy-five percent of the carboxyl groups present. Reference is made to BE-A-849,135 for a description of such dual thickening systems.

The compositions of the invention may employ a second crosslinkable vinyl monomer having a reactivity ratio with styrene of greater than 1 and may also include a thermosetting epoxy resin containing at least one 1,2-epoxy group per molecule according to the teachings of US-A-4 ,673,706.

An essential component of the compositions of the invention are thermoplastic low profile additives. In one preferred aspect, the low profile additives that may be employed in the invention are thermoplastic polymers of vinyl acetate, saturated thermoplastic polyesters, and mixtures of the same. In another aspect of the invention, the low profile additive that may be employed are thermoplastic polyalkyl methacrylate polymers. In still other aspects of the invention, other thermoplastic low profile additives are contemplated.

Suitable thermoplastic vinyl acetate polymer low profile additives are vinyl acetate homopolymers and thermoplastic copolymers containing at least 50 weight percent vinyl acetate. Such polymers include, for

example, vinyl acetate homopolymer, carboxylated vinyl acetate polymers including copolymers of vinyl acetate and ethylencially unsaturated carboxylic acids, such as acrylic acid ,methacrylic acid, crotonic acid, maleic acid, fumaric acid, itaconic acid, and the like, or anhydrides such as maleic anhydride, vinyl acetate/vinyl chloride/maleic acid terpolymers, and the like. Reference is made to US-A-3,718,714, and GB-A-1,361,841 for descriptions of some of the suitable vinyl acetate polymer low profile additives.

The useful vinyl acetate polymer low profile additives ordinarily have molecular weights within the range of from 10,000 to 250,000 and preferably from 25,000 to 175,000. They are usually employed in proportions of from about 5 to 25, and preferable from 9 to 16, weight percent, based on weight of polyester plus thermoplastic, plus monomer.

Suitable thermoplastic saturated polyester low profile additives are, in general, low molecular weight saturated polymers of polymerizable linear and/or cyclic esters and carboxylated saturated polymers of said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least 0.1, and preferably from 0.15 to 15 and higher. The preferred polymers of cyclic esters have a reduced viscosity of 0.2 to 10.

Suitable polymers are further characterized by the following basic recurring structural Unit I

Unit I

$$-[-O-(-CRR-)_{x}-(-A-)_{z}-(-CRR-)_{y}-CO-]-$$

wherein each R, which can be the same or different, is hydrogen, halogen, i.e. chlorine, bromine, iodine, or fluorine, or a monovalent hydrocarbon radical generally containing a maximum of 12 carbon atoms, and preferably containing a maximum of eight carbon atoms. A is an oxy (-O-) group; $\underline{x}$ is an integer having a value of 1 to 4 inclusive, $\underline{y}$ is an integer having a value of 1 to 4 inclusive, $\underline{z}$ is an integer having a value of 0 or 1, with the proviso that (a) the sum of $x + y + z$ is 4 to 6 inclusive and (b) the total number of R variables which are substituents other than hydrogen does not exceed 2.

Illustrative of suitable monovalent hydrocarbon radicals for R are the following: alkyl radicals such as methyl, ethyl, isopropyl, n-butyl, sec-butyl, t-butyl, n-hexyl, 2-ethylhexyl, n-dodecyl, chloroethyl, chloropropyl and the like; alkoxy radicals such as t-methoxy, ethoxy, n-propoxy, n-hexoxy, n-dodecoxy and the like; aryl radicals such as phenyl, ethylphenyl, n-propylphenyl, n-butylphenyl and the like; aryloxy radicals such as phenoxy, n-propylphenoxy, n-butylphenoxy and the like; cycloaliphatic radicals such as cyclopentyl, cyclohexyl, and the like.

In one embodiment, desirable polymers of cyclic esters are characterized by both basic recurring structural Unit I supra and basic recurring structural Unit II, as are obtained from a mixture containing a cyclic ester and a cyclic monomer such as ethylene oxide, propylene oxide and the like.

Unit II    -[O-CHR'-CHR'-]-

wherein each R' is as defined for R of Unit I, or in which the two R' variables together with the ethylene moiety of the oxyethylene chain of Unit II form a saturated cycloaliphatic hydrocarbon ring having from four to eight carbon atoms inclusive. It is preferred that recurring Unit II contains from two to twelve carbon atoms inclusive. The interconnection of Unit I and the Unit II does not involve or result in the direct bonding of two oxy groups i.e., -O-O-.

Particularly preferred polymers of cyclic esters are those which are characterized by the oxypentamethylenecarbonyl chain as seen in basic recurring structural Unit III

Unit III

$$-[-O-(-CR_1R_1-)_5-CO-]-$$

wherein each $R_1$ is hydrogen or lower alkyl, that is, alkyl having a maximum of 4 carbon atoms, with the proviso that no more than three $R_1$ variables are substituents other than hydrogen.

Thermoplastic saturated polymers of linear and/or cyclic esters are well known and the carboxylated saturated esters are well known and such thermoplastic saturated polymers, and particularly polymers prepared from epsilon-caprolactones, have been advantageously employed as low profile additives. Reference, for example, is made to US- A-3,549,586 and 3,668,178 for descriptions of thermoplastic saturated polyester low profile additives and carboxylated thermoplastic saturated polyester low profile additives prepared from cyclic esters.

Also included are thermoplastic, saturated polyesters based on saturated (i.e., free of olefinic unsaturation that is reactive with the resin in the molding application) dicarboxylic acids, such as adipic acid, isophthalic acid, terephthalic acid, and the like, and organic diols, such as ethylene glycol, diethylene glycol, neopentyl glycol, 1,6-hexanediol, and the like. These polyesters are described in, for example, US-A-3,909,483; 3,994,853; 3,736,278; and 3,929,868.

Thermoplastic polyurethanes are useful low pressure additives, alone or in admixture with other low pressure additives, and examples of them can be found in US-A-4,035,439, EP-A-74 746 and US-A-4,421,894.

The thermoplastic saturated polyester low profile additives may usually be employed in the compositions of the invention in proportions similar to those of thermoplastic vinyl acetate polymers, i.e., in proportions from 5 to 25 weight percent, and preferably from 10 to 20 weight percent, based on the weight of polyester, thermoplastic polymer and crosslinkable monomer.

Also suitable in certain aspects of the invention are thermoplastic polymeric alkyl acrylate or methacrylate low profile additives including, for example, homopolymers of methyl methacrylate, ethyl methacrylate, butyl methacrylate, methyl acrylate, ethyl acrylate; copolymers of methyl methacrylate and lower alkyl esters of acrylic and methacrylic acids, and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, and methacrylic acid. Other useful thermoplastics for the low profile additive function include polystyrene, styrene copolymers, such as styrene/butadiene copolymers, cellulose acetate butyrate, alkylene oxide polymers, and the like.

The molecular weight of the alkyl acrylate or methacrylate polymers useful in the invention may vary over a wide range from 10,000 to 1,000,000, and preferably from 25,000 to 500,000.

The thermoplastic polymer should be present in amounts ranging from 1 to 25 percent by weight, based on the weight of polyester, low profile additive and crosslinking monomer, and preferably from 5 to 20 percent by weight.

The silicon-oxyalkylene copolymer, used as the flow control agent and surface modifying agent for thermosetting resins containing a low profile additive, contains

i. at least one silicon per molecule;

ii. at least 2 alkylene oxide moieties in a sequence per molecule;

iii. the alkylene oxides being bonded to silicon in the molecule through a carbon to silicon bond.

The silicon-oxyalkylene copolymer has a molecular weight less than that of the thermoplastic low profile additive. With these parameters in mind, the silicon-oxyalkylene copolymer can assume a wide variety of structures, such as:

$$-[-O-\underset{R^0}{\overset{R''}{Si}}-O-]-$$

Siloxy Unit

joined to

$$-[QOCH_2CHR^t-]-$$

Oxyalkylene Unit

wherein the siloxy unit is directly bonded to other siloxy units, and at least one siloxy unit is directly bonded to the oxyalkylene unit by a carbon to silicon covalent bond, where the carbon of the covalent bond is covalently associated, though not necessarily directly (preferably indirectly) with the oxyalkylene unit, $R^t$ is alkyl of 1 to 8 carbon atoms, R" and $R^0$ are hydrogen, organo such as alkyl of 1 to 4 carbon atoms, aryl or

siloxy oxygen, at least one of which is organo and Q is divalent alkylene. The examples below illustrate a diverse choice of silicon-oxyalkylene copolymers.

A desirable form of silicon-oxyalkylene copolymers are those which possess functional groups which are complimentarily reactive with the thermosetting molding resin. For example, an unsaturated polyester molding resin contains as potentially reactive groups, the olefinic unsaturation, the carboxylic groups and the alcoholic hydroxyl groups. Each is typically involved in the ultimate setting up and curing of the resin. Thus, silicon-oxyalkylene copolymers can possess functional groups which are reactable with the functional groups of the resin. Illustrative of such groups are:

i. alkenyl, such as vinyl, allyl, and the like;
ii. alkenyloic, such as methacrylyl, acrylyl, maleyl, itaconyl, and the like;
iii. hydroxyalkyl, such as hydroxymethyl, $\beta$-hydroxyethyl, $\gamma$-hydroxyl-n-propyl, and the like;
iv. carboxyalkyl or carboxyaryl;
v. mercaptoalkyl analogs to the hydroxyalkyl; and the like.

Such functional groups typically occupy a terminal position on the structure of the copolymer. The amount of these groups can vary depending on the level of reactivity of the copolymer with the resin one desires. Because these copolymers typically are longer molecular structures, they contribute less to the embrittlement of the resin polymer than the crosslinking monomer. An advantage of such functionality in the copolymer is that such helps to bind the copolymer into the cured resin, thereby avoiding the seeping of copolymer from the body of the molding composition during curing.

Silicon-oxyalkylene copolymers are better than the "state of the art" Microthene™. The shorter chain dimethyl siloxanes/polyethers copolymers appear to have more effective flow additive properties than the higher molecular weight materials. All of the evaluations listed in the tables below are made with formulations containing 2 phr (pounds/hundred pounds/resin) of the flow additive. No attempt was made to optimize the concentrations of these flow additives.

In addition to the improved flow, increased tensile and flexural properties are noted with some of the flow additives. These strength properties are listed below and some of the better flow additive properties are also compared. Less shrinkage is noted for many of the panels containing flow additives. Lower shrinkage usually is reflected in better surfaces. When these panels are painted with a gloss black automotive topcoat and evaluated, all of the additives gave better surfaces than the control. Data made on samples molded on the ASTM tree mold transfer press indicates that certain silicon-oxyalkylene copolymers give improved Izod impact values. The ratio of the Izod impact measured with the flow and against the flow indicate that certain silicon-oxyalkylene copolymers improve the overall distribution of the physical properties.

The silicon-oxyalkylene copolymers may be used in combination with non-silicon containing polyoxyalkylene material. A variety of such materials have been evaluated as reflected in the examples below. They may be used in about the same range cited herein for the silicon-oxyalkylene copolymer.

The polyester molding composition may also contain one of more of the known types of conventional additives, which are employed for their known purposes in the usual amounts. The following are illustrative of such additives:

1. Polymerization initiators such as t-butyl hydroperoxide, t-butyl perbenzoate, benzoyl peroxide, cumene hydroperoxide, methyl ethyl ketone peroxide, and others known to the art. The polymerization initiator is employed in a catalytically effective amount, such as from 0.3 to 2 to 3 weight percent, based on the weight of polyester, the crosslinking monomer and the low profile additive component.
2. Fillers such as clay, hydrated alumina, silica, calcium carbonate and others known to the art.
3. Reinforcing fillers such as glass fibers or fabrics, carbon fibers or fabrics, asbestos fibers or fabrics, various organic fibers or fabrics such as those made of aromatic polyamides such as Kevlar™, polypropylene, acrylonitrile/vinyl chloride copolymer, and others known to the art. The invention is particularly desirable when fiber reinforcement is provided in the molding composition. Though glass fibers are commonly employed to make fiber reinforced composites, carbon fiber, whether graphitic or not, and the aromatic polyamide fibers are suitably employable in the practice of this invention. The fibers are usually employed in staple cut form, however, continuous filaments may be employed, particularly if the invention is to be employed to make prepreg composite compositions. The amount of fibers used in the compositions of the invention is not narrowly limited and depends on the application in mind. The amount may typically range from 10 to 65 weight percent of the resultant composite's weight.
4. Mold release agents or lubricants, such as zinc stearate, calcium stearate, and others known to the art.
5. Rubbers or elastomers such as:
   (a) homopolymers or copolymers of conjugated dienes having a weight average molecular weight of 30,000 to 400,000 or higher as described in US-A-4,020,036. The conjugated dienes contain from 4-12 carbon atoms per molecule such as 1,3-butadiene, isoprene, and the like.

(b) epihalohydrin homopolymers, a copolymer of two or more epihalohydrin monomers, or a copolymer of an epihalohydrin monomer(s) with an oxide monomer(s) having a number average molecular weight ($M^{-}$) which varies from 800 to 50,000, as described in US-A-0 4,101,604.

(c) chloroprene polymers including homopolymers of chloroprene and copolymers of chloroprene with sulfur and/or with at least one copolymerizable organic monomer wherein chloroprene constitutes at least 50 weight percent of the organic monomer make-up of the copolymer as described in US-A-4,161,471.

(d) hydrocarbon polymers including ethylene/propylene dipolymers and copolymers of ethylene/propylene and at least one nonconjugated diene, such as ethylene/propylene/hexadiene/norbornadiene, as described in US-A-4,161,471.

(e) conjugated diene butyl elastomers, such as copolymers consisting of from 85 to 99.5% by weight of a $C_4$-$C_7$ isolefin combined with 15 to 0.5% by weight of a conjugated multi-olefin having 4 to 14 carbon atoms, copolymers of isobutylene and isoprene where a major portion of the isoprene units combined therein have conjugated diene unsaturation as described in US-A-4,160,759.

(f) acrylonitrile/butadiene copolymers.

In one embodiment the invention relates to an improved low profile additive molding composition (excluding the disclaimed ones) comprising

a. a thermosetting unsaturated polyester resin,

b. from 25 to 70 weight percent of a crosslinkable olefinically unsaturated monomer that is crosslinkable with the unsaturated polyester resin,

c. from 1 to 25 weight percent of a thermoplastic low profile additive for shrinkage control, and

d. 0.1 to 10 weight percent, preferably from 0.5 to 5 weight percent, of a silicon-oxyalkylene copolymer flow control agent and surface modifying agent as defined above;

all weights being based on the combined weight of components (a), (b), and (c).

Once formulated, the compositions can be molded into thermoset articles of desired shape, particularly thermoset articles such as automobile fenders, dashboards and the like. The actual molding cycle will, of course, depend upon the exact composition being molded as well as upon the nature of a particular cured product desired. Suitable moldings cycles are conducted at temperatures of the order of 100°C to 182° C. for periods of time ranging from 0.5 minutes to 5 minutes.

Examples

Description of the materials:

- Union Carbide - LP-40A- A product of Union Carbide Corporation which is a copolymer of vinyl acetate and acrylic acid (40 weight percent) dissolved in styrene (60 weight percent).
- Snowflake™ - A calcium carbonate filler sold by Thompson-Weimann, Inc. having a mean particle size of 5 µm (microns).
- Modifier M - A 33 weight percent dispersion of magnesium oxide in an unsaturated polyester carrier vehicle sold by USS Chemicals/Polyester Unit.
- PG-9089 - is a dispersion of magnesium hydroxide and calcium hydroxide sold by Plasticolors, Inc. as a thickening agent.
- Camel Wite ™ - a calcium carbonate filler of 2.5 µm (micron) average particle size sold by H.T. Campbell & Co.
- ASP400 - a clay filler sold by Engelhard.
- Cal white II™ - a calcium carbonate filler of 5 µm (micron) average particle size sold by Georgia Marble.
- Union Carbide LP-90 - a non carboxylated poly(vinyl acetate) low profile additive at 40 weight percent in styrene.
- PG-9033 a 40% magnesium ode dispersion sold by Plasticolors, Inc.
- Koppers 3702-5 a highly reactive unsaturated polyester resin for molding application sold by the Koppers Co.
- PEP-308 - a cobalt-based cure promoter sold by Air Products Company.
- OCF™-980 - a fiber glass reinforcement sold by Owens Corning Fiberglas.
- PPG™-3029 - a fiber glass reinforcement sold by PPG Industries.
- Freeman™ 3906 - a highly reactive unsaturated polyester resin containing about 35 percent styrene sold by Freeman Chemical.

- PDI-1805 and 1803 - are pigment dispersions sold by Pigment Dispersions, Inc. to provide a standard automotive grey appearance to molded parts with no particular emphasis on color uniformity.
- PBQ - a para-benzoquinone which is an inhibitor to prevent premature curing of a molding composition.
- Union Carbide XLP-4514 - a carboxylated poly(vinyl acetate) in styrene combined with an epoxy compound and a lower reactivity secondary vinyl monomer.
- Union Carbide UCON™ 50HB55 - a 50% ethylene ode 50% propylene oxide copolymer started with butanol sold by Union Carbide.
- Union Carbide Tergitol™ NP-14 - an ethylene oxide polymer started with nonyl phenol sold by Union Carbide.
- Union Carbide UCON™ 50HB5100 - a higher molecular weight 50% ethylene oxide 50% propylene oxide copolymer started with butanol sold by Union Carbide.
- LHT-240 - a polypropylene oxide polyol started with glycerine sold by Union Carbide.
- PDO™- A 50% dispersion of tert-butylperoctoate in dioctyl phthalate sold by the Lucidol Division of Pennwalt Corp.
- Union Carbide VR-3- A mixture of commercial fatty acids sold by Union Carbide Corporation.
- USS™-13031- A highly reactive unsaturated polyester resin believed to be ortho-phthalic anhydride modified containing approximately 40 weight percent of styrene sold by USS Chemicals Polyester Unit. 70 parts per million of parabenzoquinone, based on the polyester are added.
- OCF™-951- A fiberglass roving chopped to desired length on the sheet molding compound machine and sold by Owens Corning Fiberglass Corp.
- Silicon-Oxyalkylene Copolymer Flow Additives:

I:

78%
$(MeSiO_{3/2})\ 1.2[(Me_2SiO)_{6.6}(C_2H_4O)_{19.3}(C_3H_6O)_{14.6}OBu]_3$

and

22%
$(MeSiO_{3/2})\ 1.2[(Me_2SiO)_{6.6}(C_2H_4O)_{33}(C_3H_6O)_{23}OBu]_3$

II:

$$MeSiO(Me_2SiO)_{13}(MeSiO)_{5.5}SiMe_3$$
$$C_3H_6O(C_2H_4O)_{7.5}H$$

III:

50% FLOW ADDITIVE II
50% 50HB55 (polyether sold by Union Carbide Corporation)

IV:

$$55\%\ Me_3SiO\ (Me_2SiO)_{72}(MeSiO)_{5.1}SiMe_3$$
$$C_3H_6O(C_2H_4O)_{24}(C_3H_6O)_{27}Me$$

45% Blend 50HB260, 50HB660, 50HB2000
(polyethers sold by Union Carbide Corporation)

V:

$$15\%\ Me_3SiO\ (Me_2SiO)_{3.8}(MeSiO)_{2.4}SiMe_3$$
$$C_3H_6O\ (C_2H_4O)_3Me$$

45% LHT-240 (sold by Union Carbide Corporation)

40% TERGITOL™ NP-9 (sold by Union Carbide Corporation)

VI:

Dimethylsiloxane with an ethyleneoxy and propyleneoxy copolymeric tail

Y-5889:

$CH_3(OCH_2CH_2)_xOCH_2CH_2CH_2Si(OR)_3$

VII:

$$Me_3SiO(MeSiO)_{20}(MeSiO)_{3.2}$$
$$C_3H_6O(C_3H_6O)_{16}-(C_2H_4O)_{25}(C_3H_6O)_{5.8}H$$

VIII:

$$50\%\ Me_3SiO(Me_2SiO)_{43.2}$$
$$C_3H_6-O(C_2H_4O)_{25}(C_3H_6O)_{5.8}OH$$

50% Tergitol™ NP-9 from Union Carbide

IX:

A long chain dimethyl siloxane with an ethylene oxide/propylene oxide copolymer attached to the siloxane from Union Carbide, referred to as Y-10,0006.

X:

77% 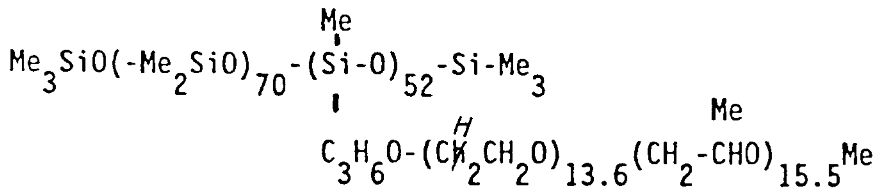

and

23% 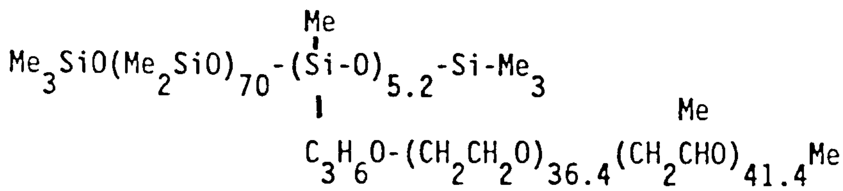

General Procedure for Preparation of Bulk Molding Compound (BMC) Formulations

All the liquid components were weighed individually into a Hobart mixing pan placed on a Toledo balance. The pan was attached to a Model C-100 Hobart mixer (in a hood). The agitator was started at slow speed, then increased to medium speed to completely mix the liquids over a period of 3-5 minutes. The agitator was then stopped and the internal mold release agent and/or fatty acid was next added to the liquid from an ice cream carton. The Hobart mixer was restarted and the mold release agent mixed with the liquid until it was completely wet out. The filler was next added to the pan contents (agitator off) then mixed, using medium to high speed, until a consistent paste was obtained. The mixer was again stopped and the weighed amount of thickening agent was mixed into the paste over a period of 2-3 minutes, the mixer was again stopped and ~ 175 grams of the paste were removed from the pan (using a large spatula) and transferred to a wide-mouthed 120 ml (4 oz.) bottle. This paste sample was stored in the capped bottle at room temperature and the viscosity was measured periodically using a Model HBT 5X Brookfield Synchro-Lectric Viscometer™ on a Helipath Stand™.

After removal of the paste sample, the contents were reweighed and styrene loss made up, the chopped glass fibers were added slowly (from an ice cream carton) to the pan with the mixer running on slow speed. The mixer was run for ~30 seconds after all the glass was in the paste. This short time gave glass wet out without glass degradation. The pan was then removed from the mixer and separate portions of the BMC mix of ~450 grams each were removed using spatulas and transferred to aluminum foil lying on a balance pan (balance in the hood). The mix was tightly wrapped in the aluminum foil (to prevent loss of styrene via evaporation) and stored at room temperature until the viscosity of the retained paste sample reached molding viscosity. The weight of the BMC added to the foil varies with the molding application.

General Procedures for Preparation of Sheet Molding Compound (SMC) Formulations

All the liquid components were weighed individually into a 19ℓ (5 gallon) open top container placed on a Toledo balance. The contents of the container were the mixed (in a hood) with a high speed Cowles-type dissolver. The agitator was started at a slow speed, then increased to medium speed to completely mix the liquids over a period of 2-3 minutes. The mold release agent and/or fatty acid was next added to the liquids from an ice cream carton and mixed until completely dispersed. The filler was next added gradually from a tared container until a consistent paste was obtained and the contents were then further mixed to a minimum temperature of 32°C (90°F). The thickener was next mixed into the paste over a period of 2-3 minutes, the mixer was stopped and ~ 175 grams of the paste was removed from the container and

transferred to a wide-mouthed 120 ml (4 oz.) bottle. The paste sample was stored in the capped bottle at room temperature and the viscosity measured periodically using a Model HBT 5X Brookfield Synchro-Lectric Viscometer™ on a Helipath Stand™.

The balance of the paste is next added to the doctor boxes on the SMC machine were it is further combined with fiber glass ( ~2.5 cm (1") fibers). The sheet molding compound (SMC) is then allowed to mature to molding viscosity and then molded into the desired article.

Molding Facilities 30.5 cm x 30.5 cm x 3.2 mm (12" x 12" x 1/8") Test Panels

Flat panels for evaluation are molded on a 75 ton Queens Hydraulic press. The press contains a matched dye set of 30.5 cm x 30.5 cm (12" x 12") chrome plated molds. The female cavity is installed in the bottom and the male portion is at the top. Both molds are electrically heated and are controlled on separate circuits so that the molds can be operated at different temperatures. The top and bottom temperature was 149°C (300°F). The molding pressure which can be varied from 0-75 Ton was run at maximum pressure. The molds do not contain ejector pins: therefore, the molded panel is removed with a rubber suction cup and the use of a stream of air. The panels are laid on a flat surface, weighted to keep them flat and allowed to cool overnight. The molded panel is measured with a micro caliper from corner to corner in all four directions to determine shrinkage which is an average of the four readings.

Description of Transfer Molding Procedure

A 100 ton hydraulic transfer press was utilized. The mold was an ASTM tree mold. The temperature used was approximately 149°C (300°F). To determine flow properties a 160 g. charge of bulk molding compound was charged to the ram cylinder and injected into the closed mold at various pressures, typically 6.9 MPa (1000psi). The flow of the compound was judged by the time taken to empty the cylinder and fill the mold. The shorter the time, the better the flow of the compound.

Physical Properties

Physical properties such as tensile strength, flexural strength and Izod Impact (notched) were all determined by standard ASTM tests for glass reinforced thermosetting polyester resin composites.

MCR Determinations

MCR values are obtained by the use of a Bendix Profilometer™ which runs a stylus over the surface of a panel measuring the deviation above or below a normal, therefore, recording the peaks and valleys of the surface. The lower the MCR number, the better the surface.

Flow Additive Screen Test

This is conducted in a 30.5 cm by 30.5 cm (12" by 12") matched metal die mold in a 75 ton molding press at temperatures of approximately 149° C (300°F) at cure times of 90 - 120 seconds:

a) 75 g charge placed in lower, left corner of the mold. The panels are molded at 35 ton and 75 ton molding pressure and compared.

b) 75 g charge placed in the middle of a 30.5 cm x 30.5 cm (12" x 12") mold. The panels are molded at 75 ton.

c) 100 g charge placed in lower left corner of a 30.5 cm x 30.5 cm (12" x 12") mold. Panels are molded at 75 ton.

The cured panels obtained were compared to a prepared grid representing the full 30.5 cm x 30.5 cm (12" x 12") area and the numbers of squares not filled recorded as the flow rating. Therefore, the lower the number the better the flow.

Four hundred fifty gram 30.5 cm x 30.5 cm (12" x 12") flat panels are also molded from each of the formulations containing flow ad lives and the following properties measured on the panels. These panels were approximately 2.8 mm (0.110 inches) in thickness.

1. Shrinkage
2. Water Absorption
3. Tensile Strength
4. Elongation

5. Flexural Strength

The results of the flow and physical measures are tabulated below. Three of the formulations listed are considered controls or standards which are used to rate the potential flow additives.

1. Base BMC formulation listed below with no flow additive. This formulation established the base line. The flow rating for this formula is 82. The lower the molding pressure at a fixed charge weight, the better the flow.

2. Microthene™, a finely divided polyethylene powder, is often added to injection molding formulations by molders to improve flow. This material is considered a "state of the art" flow additive. The flow rating for this material is 48.

3. Y-5889, a silylated CARBOWAX™ has been used commercially to treat alumina trihydrate to reduce the initial paste viscosities of bulk molding compound (BMC) and sheet molding compound (SMC) containing the treated alumina. Data generated indicates this material also improves the flow of the molding compound. The flow rating for this additive is 42.

Using the above three formulations as standards, a series of additives are evaluated as flow additives. Results of the screening evaluation are tabulated in Tables I, II and III.

TABLE I

FLOW STUDY FORMULATION

| Formulation | Parts by Wt./100 |
|---|---|
| Freeman 3906 (Unsaturated Polyester) | 65 |
| Union Carbide LP-40A (Low Profile Additive) | 35 |
| Cal White II (Calcium Carbonate Filler) | 180 |
| Zinc Stearate (Mold Release) | 2 |
| Union Carbide VR-3 (Viscosity Reducer) | 2 |
| TBPB (Tertiary Butyl Perbenzoate Peroxide) | 1.5 |
| Modifier M (Thickener) | 2.8 |
| Flow Additive | 2 |
| Fiberglass | 25-26 Wt. % |

MOLDING PARAMETERS

| | |
|---|---|
| BMC Molding Viscosity | approx. 30MM mPa.s (Centipoises) |
| Charge Placement | Center of Mold |
| Temperature | 149°C (300°F) |
| Pressure | 75 Tons |
| Cure Time | 450 g panel - 3 minutes<br>75 g panel - 2 minutes |

TABLE II
BMC - FLOW ADDITIVE SCREEN TEST

| Flow Additive | Flow Rating | Molding Viscosity mPa.s(cps) | Shrinkage mils/inch) 0.001cm/cm | Tensile, MPa(psi) | Elong. | Flex. | Water Absorb Wt. % |
|---|---|---|---|---|---|---|---|
| X | 4 | 28MM | 0.0 | 42.5(6170) | 0.34 | 20,169 | 0.39 |
| I | 4 | 30MM | 0.19 | 38.4 (5578) | 0.15 | 13,553 | 0.42 |
| II | 26 | 42MM | 0.48 | 45.9(6658) | 0.36 | - | .475 |
| III | 25 | 44,8MM | 0.29 | 32.3 (5120) | 0.25 | 14,952 | - |
| V | 25 | 30.4MM | 0.10 | 54.9(7975) | 0.65 | - | .40 |
| VI | 32 | 28MM | +0.15 | 42.4(6155) | 0.34 | - | .34 |
| Y-5889 | 42 | 27MM | +0.37 | 40.1(5821) | 0.42 | 12,932 | 0.37 |
| Microthene | 48 | 19.2MM | 0.06 | - | 0.66 | 15,602 | 0.28 |
| CONTROL | 71 | 23.2MM | - | - | - | - | - |
| CONTROL | 82 | 38MM | 0.46 | 41.3(5995) | 0.29 | 17,990 | - |
| Union Carbide 50HB55 | 79 | 27mm | - | - | - | - | - |
| Union Carbide Tergitol NP-14 | 57 | 35mm | - | - | - | - | - |
| Union Carbide 50HB5100 | 58 | 25.6mm | - | - | - | - | - |

TABLE III

| BMC SCREENING | |
|---|---|
| FLOW RATINGS | FLOW ADDITIVES |
| 4-10 | X,I |
| 18-29 | II, III, V |
| 30-50 | VI, Y-5889 |
| CONTROL | 38MM - 82 |
| | 23MM - 71 |
| 82 | approx. 85% MOLD FILL OUT |
| 4 | > 99% MOLD FILL OUT |

TABLE IV

TRANSFER MOLDING BMC EXPERIMENTS

Parts by Weight

| Experiment No. | 1 | 2 | 3 | 4 | 5 | 6 | 7 | 8 |
|---|---|---|---|---|---|---|---|---|
| U.S. Steel MR-13031 | 60 | 60 | 60 | 60 | 60 | 60 | 60 | 60 |
| Union Carbide LP-40A | 40 | 40 | 40 | 40 | - | 60 | 60 | 60 |
| Union Carbide XLP-4514 | - | - | - | - | 44.5 | - | - | - |
| V Flow Additive | - | 3 | - | - | - | - | - | - |
| IX Flow Additive | - | - | 2 | - | - | - | - | - |
| VII Flow Additive | - | - | - | 2 | - | - | - | - |
| I Flow Additive | - | - | - | - | 2 | - | - | 0.8 |
| VIII Flow Additive | - | - | - | - | - | 2 | - | - |
| II Flow Additive | - | - | - | - | - | - | 0.8 | - |
| Union Carbide LHT-240 | - | - | - | - | - | - | 1.2 | 1.2 |
| Camel Wite | 140 | 140 | 140 | 140 | 140 | 140 | 140 | 140 |
| ASP-400 | 21 | 21 | 21 | 21 | 21 | 21 | 21 | 21 |
| PDI1803 | 0.3 | 0.3 | 0.3 | 0.3 | 0.3 | 0.3 | 0.3 | 0.3 |
| p-benzoquinone | 0.02 | 0.02 | 0.02 | 0.02 | 0.02 | 0.02 | 0.02 | 0.02 |
| PG-9089 | 9.85 | 9.98 | 10.7 | 11.5 | 10.9 | 10.7 | 10.7 | 10.7 |
| PPG3029 (1/4 (Wt.%) Inch) 6.35mm glass | 20 | 20 | 20 | 20 | 20 | 20 | 20 | 20 |
| Molding Viscosity (cps x $10^{-6}$) mPa.s x $10^{-6}$ | 12 | 10 | 14.4 | 12.8 | 11.6 | 13.2 | 9.6 | 13.2 |

TABLE V
RESULTS OF TRANSFER MOLDING EXPERIMENTS

| Experiment No. | 1 | 2 | 3 | 4 | 5 | 6 | 7 | 8 |
|---|---|---|---|---|---|---|---|---|
| Time to Fill Mold, seconds | | | | | | | | |
| at 6.9 MPa (1000 psi) | 13.0 | 8.0 | 11.0 | 6.5 | 8.0 | 8.5 | 8.5 | 9.5 |
| at 4.1 MPa (600 psi) | 31 | 25 | 25 | 15.0 | 21.5 | 20 | 26 | 24 |
| Bar Length | 4.988 | 4.993 | | 4.988 | 4.990 | 4.990 | 4.990 | 4.991 |

TABLE VI

OTHER TRANSFER MOLDING EXPERIMENTS

| | Parts by Weight | | | | |
|---|---|---|---|---|---|
| | 1 | 2 | 3 | 4 | 5 |
| USS-13031 | 60 | 60 | 60 | 60 | 60 |
| LP-40A | 40 | 40 | 40 | 40 | 40 |
| VII Flow Additive | - | 0.5 | 1.0 | - | - |
| III Flow Additive | - | - | - | 0.75 | |
| II Flow Additive | - | - | - | - | 0.75 |
| Camel Wite | 140 | 140 | 140 | 140 | 140 |
| ASP-400 | 21 | 21 | 21 | 21 | 21 |
| Zinc Stearate | 4 | 4 | 4 | 4 | 4 |
| TBPB | 1.5 | 1.5 | 1.5 | 1.5 | 1.5 |
| PBQ | 0.02 | 0.02 | 0.02 | 0.02 | 0.02 |
| PDI-1803 | 0.3 | 0.3 | 0.3 | 0.3 | 0.3 |
| PG-9089 | 10.6 | 10.6 | 13.75 | 10.6 | 10.6 |
| $H_2O$ | 0.05 | 0.05 | 0.05 | 0.05 | 0.05 |
| PPG-3209 (Wt. %) | 20.0 | 20.0 | 20.0 | 20.0 | 20.0 |
| Physical Properties, Tensile Strength, MPa (Mpsi) | 28900 (4.2) | 33800 (4.9) | 32400 (4.7) | 46900 (6.8) | 35100 (5.1) |
| % Increase | - | 16.7 | 11.0 | 6.8 | 5.1 |
| Izod Impact (ft-lbs/inch) Nm/cm | 0,59 (1.1) | 0.64 (1.2) | 0,64 (1.2) | 0.85 (1.6) | 0.96 (1.8) |
| (against flow) | 2,40 4.5 | 3,04 (5.7) | 2,40 (4.5) | 1.66 (3.1) | 1.50 (2.8) |
| Avg. Izod Impact (ft-lbs/inch) Nm/cm | 1.50 (2.80) | 1.84 (3.45) | 1,52 (2.85) | 1.25 (2.35) | 1,23 (2.30) |
| MCR | 49.6 | 45.9 | 42.0 | 37.0 | 29.7 |
| Impact Ratio | 3.8 | 4.75 | 3.75 | 1.94 | 1.56 |

Application to Sheet Molding Compound (SMC)

Examples showing the applicability of this invention to SMC are shown in Tables VII and VIII.

TABLE VII

SHEET MOLDING COMPOUND EXPERIMENTS

Sheet Molding Compound (SMC) was prepared using the following formulations:

| Experiment No. | Parts by Wt. 1 | Parts by Wt. 2 |
|---|---|---|
| Koppers 3702-5 | 50 | 50 |
| Union Carbide LP-40A | 37 | 37 |
| Styrene | 11 | 11 |
| PDI-1805 | 0.5 | 0.5 |
| t-butyl perbenzoate | 1.2 | 1.2 |
| Air Products PEP-308 | 0.6 | 0.6 |
| Zinc Stearate | 2.0 | 2.0 |
| Union Carbide VR-3 | 2.0 | 2.0 |
| Cal White II | 180 | 180 |
| B Side[1] | 9.8 | 9.8 |
| OCF-980 1" fiber Wt. % | - | - |
| II Flow Additive | - | 2 |
| LHT-240 | - | 2 |

1. B Side formulation: Union Carbide LP-90 - 30%; styrene 10.07%; PG-9033 (Mg0) - 200%; Cal White II - 40%

Surface smoothness of experiment 2 is much better than that of the control experiment 1 as molded at 149 °C (300 °F) and 6.9 mPa (1000 psi) pressure pressure for 2 minutes to form 30.5 cm x 30.5 cm x 3.05 mm (18" x 18" x 0.120") laminate. In a 30.5 cm x 30.5 cm (12" x 12)" matched metal die mold under similar conditions of temperature, pressure and cure time the material of experiment 1 required 200 grams of SMC to fill out the mold, while experiments 2 required only 150 grams to fill out the mold indicating better flow properties.

TABLE VIII

| FURTHER SMC EXPERIMENTS | | | |
|---|---|---|---|
| Experiment No. | Parts by Wt. 1 | Parts by Wt. 2 | Parts by Wt. 3 |
| Freeman 3906 | 65 | 65 | 65 |
| Union Carbide LP-40A | 35 | 35 | 35 |
| Cal White II | 180 | 180 | 180 |
| Zinc Stearate | 2 | 2 | 2 |
| Union Carbide VR-3 | 2 | 2 | 2 |
| PDI-1803 | 0.3 | 0.3 | 0.3 |
| Modifier M | 2.6 | 2.6 | 2.6 |
| I Flow Additive | - | 2.0 | - |
| V Flow Additive | - | - | 2.0 |
| OCF-951 (one (Wt. %) inch) 2.5 cm fiberglass | 26 | 26 | 27 |
| Molding Viscosity, (cps x $10^{-6}$) mPa.s x $10^{-6}$ | 40 | 39 | 33 |
| Flow Rating | 71 | 14 | 31 |
| Shrinkage, (mils/inch)(0.001 cm/cm) | 0.17 | +0.25 expansion | +0.08 expansion |

Shrinkage measurement is the comparison of the dimensions of the part at room temperature with the dimensions of the 30.5 cm x 30.5 cm (12" x 12") matched metal die mold used to mold the parts at 149 °C (300 °F) for 2-3 minutes at 75 tons of pressure. The expansion indicates at better reproduction of the mold surface.

## Claims

**1.** A molding additive composition comprising a mixture of low profile additive and a surfactant additive containing a silicon-oxyalkylene copolymer which acts both as flow control agent and surface modifying agent and contains

a) at least one silicon per molecule;

b) at least 2 alkylene oxide moieties in a sequence per molecule;

c) the alkylene oxides being bonded to silicon in the molecule through a carbon to silicon bond;

said low profile additive being a thermoplastic polymer having a molecular weight greater than that of the silicon-oxyalkylene copolymer;

compositions comprising vinyl acetate/maleic acid copolymer having 0.7 to 2.1 weight percent maleic acid, the remainder being vinyl acetate, and showing a styrene solution viscosity (40 weight percent, 25 °C) of 3,400 to 16,000 mPa.s (centipoise) as the low profile additive and a siloxane-polyoxyalkylene block copolymer as the silicon-oxyalkylene copolymer being excluded.

**2.** The molding additive composition of claim 1 wherein there is present an olefinically unsaturated compound as crosslinking monomer.

**3.** The molding additive composition of claim 2 wherein the crosslinking monomer comprises styrene.

**4.** The molding additive compsition of any one of claims 1 to 3 containing a non-silicon containing polyoxyalkylene material.

**5.** A molding composition comprising

(a) a thermosetting unsaturated polyester resin;

(b) from 25 to 70 weight percent of an olefinically unsaturated crosslinking monomer which is crosslinkable with the unsaturated polyester resin;

(c) from 1 to 25 weight percent of a thermoplastic low profile additive for shrinkage control; and

(d) 0.1 to 10 weight percent of a silicon-oxyalkylene copolymer as defined in claim 1 and having a lower molecular weight than the low profile additive (c); all weights being based on the combined weight of components (a), (b) and (c);

compositions comprising (a') a polyester made from isophthalic acid, maleic anhydride and propylene glycol in approximate molar proportions of 1.0 : 3.0 : 4.4 and having an acid number of 19.9 and a

molecular weight to double bond ratio of 224.7; (b') 46.76 weight percent, based on the combined weight of (a'), (b') and (c'), of styrene, (c') 14 weight percent, based on the combined weight of (a'), (b') and (c'), of a vinyl acetate/maleic acid copoylmer having 0.7 to 2.1 weight percent maleic acid, the remainder being vinyl acetate, and showing a styrene solution viscosity (40 weight percent, 25 °C) of 3,400 to 16,000 mPa.s (centipoise); and (d') a Siloxane-polyoxyalkylene block copolymer in an amount of 0.3 or 0.6 weight percent of (a'), (b') and (c'); being excluded.

**6.** The molding composition of claim 5 wherein the crosslinking monomer (b) comprises styrene.

**7.** The molding composition of claim 5 or 6 wherein the silicon-oxyalkylene copolymer (d) contains a functional group reactive with the polyester resin (a).

**8.** The molding composition of claim 7 wherein the functional group is an olefinic unsaturation.

**9.** The molding composition of any one of claims 5 to 8 wherein there is provided a reinforcing fiber.

**10.** The molding composition of claim 9 wherein the reinforcing fiber is glass fiber, for instance, staple fiber, or is carbon fiber, for instance, in the form of graphite.

**11.** The molding composition of claims 5 to 10 wherein the polyester resin (a) comprises a vinyl ester resin.

**Patentansprüche**

**1.** Formgebungsadditiv-Zusammensetzung, umfassend eine Mischung von Maßstabilitäts-Additiv und einem TensidAdditiv, die ein Silicium-Oxyalkylen-Copolymer enthält, das sowohl als Fließregulierungsmittel als auch als Oberflächenmodifizierungsmittel fungiert und enthält

a) mindestens ein Silicium pro Molekül;
b) mindestens 2 Alkylenoxid-Einheiten in einer Sequenz pro Molekül;
c) wobei die Alkylenoxide im Molekül durch eine Kohlenstoff-Silicium-Bindung an Silicium gebunden sind;

wobei das Maßstabilitäts-Additiv ein thermoplastisches Polymer mit einem Molekulargewicht größer demjenigen des Silicium-Oxyalkylen-Copolymeren ist;
wobei Zusammensetzungen, die Vinylacetat/Maleinsäure-Copolymer mit 0,7 bis 2,1 Gewichtsprozent Maleinsäure, wobei der Rest Vinylacetat ist, das eine Viskosität in Styrol-Lösung (40 Gewichtsprozent, 25 °C) von 3400 bis 16000 mPa.s (Centipoise) zeigt, als das Maßstabilitäts-Additiv und ein Siloxan-Polyoxyalkylen-Block-Copolymer als das Silicium-Oxyalkylen-Copolymer umfassen, ausgeschlossen sind.

**2.** Formgebungsadditiv-Zusammensetzung nach Anspruch 1, in der eine olefinisch ungesättigte Verbindung als Vernetzungs-Monomer anwesend ist.

**3.** Formgebungsadditiv-Zusammensetzung nach Anspruch 2, in der das Vernetzungs-Monomer Styrol umfaßt.

**4.** Formgebungsadditiv-Zusammensetzung nach irgendeinem der Ansprüche 1 bis 3, die ein kein Silicium enthaltendes Polyoxyalkylen-Material enthält.

**5.** Formmasse, umfassend

(a) ein thermisch härtendes ungesättigtes Polyester-Harz;
(b) 25 bis 70 Gewichtsprozent eines olefinisch ungesättigten Vernetzungs-Monomeren, das mit dem ungesättigten Polyester-Harz vernetzbar ist;
(c) 1 bis 25 Gewichtsprozent eines thermoplastischen Maßstabilitäts-Additivs für die Schrumpfungskontrolle; und
(d) 0,1 bis 10 Gewichtsprozent eines Silicium-Oxyalkylen-Copolymeren wie in Anspruch 1 definiert und mit einem niedrigeren Molekulargewicht als das Maßstabilitäts-Additiv (c); wobei alle Gewichte auf das Gesamtgewicht der Komponenten (a), (b) und (c) bezogen sind;

wobei Zusammensetzungen ausgeschlossen sind, die umfassen (a') einen aus Isophthalsäure, Maleinsäureanhydrid und Propylenglycol in ungefähren molaren Verhältnissen von 1,0:3,0:4,4 hergestellten Polyester mit einer Säurezahl von 19,9 und einem Verhältnis von Molekulargewicht zu Doppelbindung von 224,7; (b') 46,76 Gewichtsprozent, bezogen auf das Gesamtgewicht von (a'), (b') und (c'), Styrol; (c') 14 Gewichtsprozent, bezogen auf das Gesamtgewicht von (a'), (b') und (c'), eines Vinylacetat/Maleinsäure-Copolymeren mit 0,7 bis 2,1 Gewichtsprozent Maleinsäure, wobei der Rest Vinylacetat ist, das eine Viskosität in Styrol-Lösung (40 Gewichtsprozent, 25 °C) von 3400 bis 16000 mPa.s (Centipoise) zeigt; und (d') ein Siloxan-Polyoxyalkylen-Block-Copolymer in einer Menge von 0,3 oder 0,6 Gewichtsprozent von (a'), (b') und (c').

**6.** Formmasse nach Anspruch 5, in der das Vernetzungs-Monomer (b) Styrol umfaßt.

**7.** Formmasse nach Anspruch 5 oder 6, in der das Silicium-Oxyalkylen-Copolymer (d) eine mit dem Polyester-Harz (a) reaktive funktionelle Gruppe enthält.

**8.** Formmasse nach Anspruch 7, in der die funktionelle Gruppe eine olefinische Nichtsättigung ist.

**9.** Formmasse nach irgendeinem der Ansprüche 5 bis 8, in der eine verstärkende Faser bereitgestellt ist.

**10.** Formmasse nach Anspruch 9, in der die verstärkende Faser Glasfaser, beispielsweise Stapelfaser, ist, oder Kohlenstoffaser, beispielsweise in Form von Graphit, ist.

**11.** Formmasse nach den Ansprüchen 5 bis 10, in der das Polyester-Harz (a) ein Vinylester-Harz umfaßt.

**Revendications**

**1.** Composition d'additif pour moulage, comprenant un mélange d'un additif conférant une stabilité dimensionnelle et d'un additif surfactant contenant un copolymère silicium-oxyalkylène qui joue à la fois le rôle d'agent de régulation d'écoulement et le rôle d'agent de modification de surface et qui contient

a) au moins un atome de silicium par molécule ;
b) au moins deux groupements oxyde d'alkylène dans une séquence par molécule ;
c) les oxydes d'alkylène étant liés au silicium dans la molécule par une liaison carbone-silicium ;

ledit additif conférant une stabilité dimensionnelle étant un polymère thermoplastique ayant un poids moléculaire supérieur à celui du copolymère silicium-oxyalkylène ;

les compositions comprenant un copolymère acétate de vinyle/acide maléique renfermant 0,7 à 2,1 pour cent en poids d'acide maléique, le pourcentage restant consistant en acétate de vinyle, et présentant une viscosité en solution dans le styrène (40 pour cent en poids, 25 °C) de 3400 à 16 000 mPa.s (centipoises) comme additif conférant une stabilité dimensionnelle et un copolymère séquencé siloxane-polyoxyalkylène comme copolymère silicium-oxyalkylène, étant exclues.

**2.** Composition d'additif pour moulage suivant la revendication 1, dans laquelle est présent un composé à insaturation oléfinique comme monomère de réticulation.

**3.** Composition d'additif pour moulage suivant la revendication 2, dans laquelle le monomère de réticulation comprend le styrène.

**4.** Composition d'additif pour moulage suivant l'une quelconque des revendications 1 à 3, contenant un polyoxyalkylène ne renfermant pas de silicium.

**5.** Composition à mouler, comprenant

(a) une résine polyester insaturée thermodurcissable ;

(b) 25 à 70 pour cent en poids d'un monomère de réticulation à insaturation oléfinique qui est réticulable avec la résine polyester insaturée ;

(c) 1 à 25 pour cent en poids d'un additif thermoplastique conférant une stabilité dimensionnelle pour la limitation du retrait ; et

(d) 0,1 à 10 pour cent en poids d'un copolymère silicium-oxyalkylène répondant à la définition suivant la revendication 1 et ayant un plus bas poids moléculaire que l'additif conférant une stabilité dimensionnelle (c) ; tous les poids étant basés sur la somme des poids des constituants (a), (b) et

(c) ;

les compositions comprenant (a') un polyester préparé à partir d'acide isophtalique, d'anhydride maléique et de propylèneglycol en un rapport molaire approximatif égal à 1,0 : 3,0 : 4,4 et ayant un indice d'acide de 19,9 et un rapport du poids moléculaire aux doubles liaisons de 224,7 ; (b') 46,76 pour cent en poids, sur la base de la somme des poids de (a'), (b') et (c'), de styrène, (c') 14 pour cent en poids, sur la base de la somme des poids de (a'), (b') et (c'), d'un copolymère acétate de vinyle/acide maléique renfermant 0,7 à 2,1 pour cent en poids d'acide maléique, le pourcentage restant consistant en acétate de vinyle, et présentant une viscosité en solution dans le styrène (40 pour cent en poids, 25 °C) de 3400 à 16 000 mPa.s (centipoises) ; et (d') un copolymère séquencé siloxane-polyoxyalkylène en une quantité de 0,3 ou 0,6 pour cent en poids de (a'), (b') et (c') ; étant exclues.

**6.** Composition à mouler suivant la revendication 5, dans laquelle le monomère de réticulation (b) comprend le styrène.

**7.** Composition à mouler suivant la revendication 5 ou 6, dans laquelle le copolymère silicium-oxyalkylène (d) contient un groupe fonctionnel réactif avec la résine polyester (a).

**8.** Composition à mouler suivant la revendication 7, dans laquelle le groupe fonctionnel est une insaturation oléfinique.

**9.** Composition à mouler suivant l'une quelconque des revendications 5 à 8, dans laquelle est présente une fibre de renforcement.

**10.** Composition à mouler suivant la revendication 9, dans laquelle la fibre de renforcement consiste en fibre de verre, par exemple une fibre coupée, ou consiste en une fibre de carbone, par exemple sous forme de graphite.

**11.** Composition à mouler suivant les revendications 5 à 10, dans laquelle la résine polyester (a) comprend une résine d'ester vinylique.